# EUROPEAN PATENT SPECIFICATION

(11) **EP 0 867 651 B1**
(45) Date of publication and mention of the grant of the patent: **28.04.2004**
(21) Application number: 98830103.2
(22) Date of filing: 26.02.1998
(51) Int. Cl.: F16L 25/00, F16L 11/15, B29C 49/00

(54) **Constructionally simple outlet tube for household appliances and the like**
Auslassrohr einfacher Bauart für Haushaltgeräte und dgl
Tube de sortie de construction simple pour des appareils ménagers et similaires

(30) Priority: 21.03.1997 IT MI970668
(43) Date of publication of application: 30.09.1998
(73) Proprietor: Tamborini, Giancarlo, 21100 Varese (IT); Tamborini, Ariberto, 21100 Varese (IT)
(72) Inventor: Tamborini, Giancarlo, 21100 Varese (IT); Tamborini, Ariberto, 21100 Varese (IT)
(74) Representative: Cicogna, Franco

(56) References cited:
- DE-C- 19 529 830
- GB-A- 2 278 176
- US-A- 5 472 659

## Description

### BACKGROUND OF THE INVENTION

The present invention relates to a constructionally simple tube-sleeve assembly for household appliances and the like.

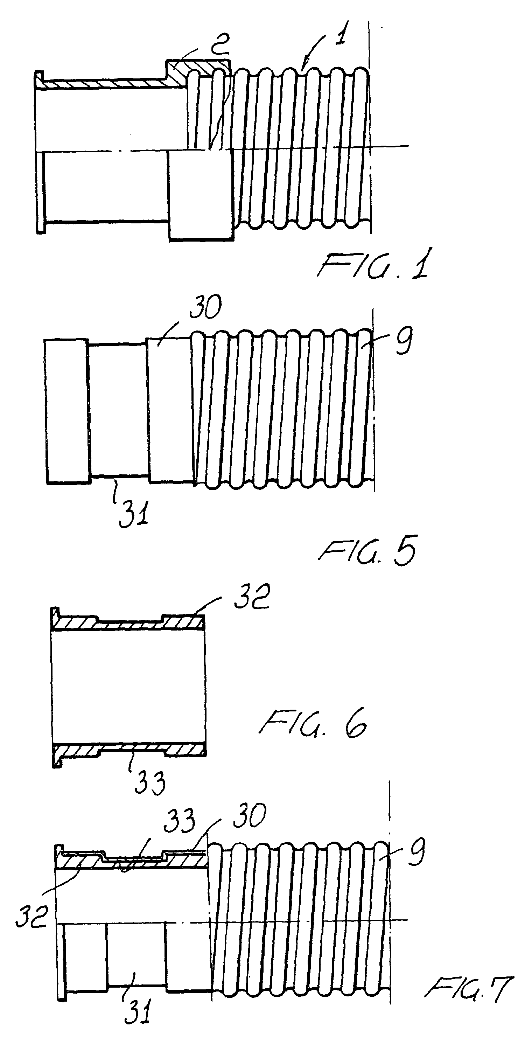

Prior outlet tubes or pipes for household appliances and the like have been conventionally made, as shown in figure 1, starting from a rigid material corrugated tubular element 1, having end portions provided with comparatively soft sleeve elements 2, usually applied by overmolding, so as to allow the tubular element to be easily coupled to corresponding outlets of the household appliance.

This arrangement involves a very high cost, since the mentioned overmolding method can be only carried out at a low operating speed and, moreover, it requires complex and expensive apparatus.

The document US-A-5 472 659 discloses a tube comprising a tubular element having at the ends thereof substantially cylindric portions, the tube being a component tube including a smooth internal tube and an external tube provided with transverse grooves and welded with the internal tube. The document DE-A-19 529 830 discloses a corrugated tubular element having at the ends thereof substantially cylindric portions. This tubular element does not include any sleeve elements.

### SUMMARY OF THE INVENTION

Accordingly, the aim of the present invention is to overcome the above mentioned drawbacks, by providing a constructionally simple tube-sleeve assembly, affording the possibility of omitting the above mentioned overmolding processing step, while providing a tube having the desired constructional features, in order to allow said tube to be easily coupled.

Within the scope of the above mentioned aim, a main object of the present invention is to provide such an outlet tube-sleeve assembly which can be easily applied to household appliance outlets, while providing the advantage of including already preset seats for coupling the pipe restraining clamps.

Another object of the present invention is to provide such an outlet tube which is very reliable and safe in operation.

Yet another object of the present invention is to provide such a constructionally simple outlet tube which can be easily made starting from easily available elements and materials, and which, moreover, is competitive from a mere economic standpoint.

According to one aspect of the present invention, the above mentioned aim and objects, as well as yet other objects, which will become more apparent hereinafter, are achieved by a tube-sleeve assembly for household appliances according to claim 1.

### BRIEF DESCRIPTION OF THE DRAWINGS

Further characteristics and advantages of the present invention will become more apparent hereinafter from the following detailed disclosure of a preferred, though not exclusive embodiment, of a constructionally simple outlet tube-sleeve assembly, which is illustrated, by way of an indicative, but not limitative, example in the accompanying drawings, where:
Figure 1 is a schematic partially broken-away cross sectional view illustrating an outlet tube according to the prior art;
Figure 2 is an exploded perspective view illustrating an end portion of a corrugated tube provided with a related sleeve element according to the present invention;
Figure 3 is an exploded cross-sectional view illustrating the end portion of the tube and related sleeve element;
Figure 4 illustrates the sleeve element applied to the end portion of the tube;
Figure 5 is an elevation view illustrating a different end portion of a corrugated tube;
Figure 6 illustrates a contoured or shaped sleeve element;
Figure 7 is a partial cross-sectional view illustrating a tube end portion with a contoured or shaped sleeve element;

### DESCRIPTION OF THE PREFERRED EMBODIMENTS

With reference to the above mentioned figures, the constructionally simple outlet tube-sleeve assembly, which has been specifically designed for household appliances and the like, according to the present invention, and which has been generally indicated by the reference number 8, comprises a corrugated tube or pipe 9, which is made of a rigid material by an apparatus, for example of the type shown in Figure 8, which is provided at the bottom and top thereof, with respect to a machine therefrom a tube is ejected, top chains 10 and bottom chains 11, provided with shaping or contouring plug elements 12 for corrugating the tube.

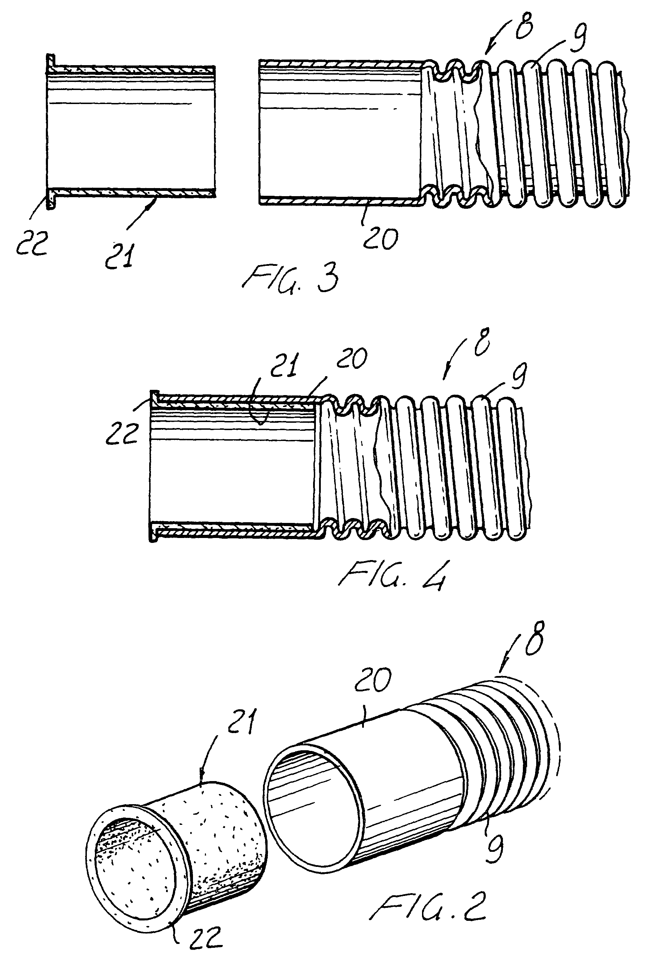

At preset spacings, between the above mentioned plug elements 12, further plug elements 15 for the tube end portions are provided, said further plug elements 15 having a cylindrical configuration so as to easily make a cylindrical smooth end portion 20, as shown in Figure 2.

In said cylindrical end portion 20, according to the invention, a soft rubber sleeve element 21 can be engaged, said sleeve element being provided with a press-coupled flange 22, and affecting the inner surface of the end portion, so as to allow it to be quickly and simply coupled to conventional household appliance outlets.

As shown in Figures 5 to 7, it is further possible to provide a contoured or shaped cylindrical end portion 30 provided with recesses 31 in which a contoured sleeve element 32 can be press engaged, said sleeve element being provided with a groove 33 engaging with said recess 31 thereby providing a holding element preventing the sleeve element from disengaging and, furthermore, in order to provide on the outer surface of the end portion a region to which can be easily applied the tube clamping clamp, the latter being firmly held in its set position.

From the above disclosure it should be apparent that the invention fully achieves the intended aim and objects.

In particular, the fact is to be pointed out that an outlet tube-sleeve assembly construction has been provided, the soft rubber end portion thereof can be press-coupled to the tube, thereby it can be made by multiple cavity molds, while greatly reducing the making time, with respect to the conventional prior methods.

## Claims

1. A tube-sleeve assembly for household appliances, **characterized in that** said tube-sleeve assembly comprises a first piece consisting of a corrugated tubular element (9) having, at at least one end thereof, a substantially smooth cylindric portion (20) and a second piece consisting of a soft material cylindric sleeve (21) element which can be slidably engaged in said cylindric portion (20), said sleeve element (21) having an end flange provided for abutting against the end portion of said cylindric portion (20) of said corrugated tubular element (9).

2. An assembly according to Claim 1, **characterized in that** said cylindric portion (20) comprises a recess (31) in which can be pressure engaged a groove (33) of said sleeve element (21) to prevent said sleeve element (21) from being axially ejected from said tubular element (9).

3. An assembly according to Claim 2, **characterized in that** said recess (31) is adapted to house a tube clamping clamp.

## Patentansprüche

1. Rohr-Muffen-Baugruppe einfacher Bauart für Haushaltsgeräte,
**dadurch gekennzeichnet, dass**
die Rohr-Muffen-Baugruppe ein aus einem gewellten Rohrelement (9) bestehendes, erstes Teil aufweist, welches zumindest an einem seiner Enden einen im Wesentlichen glatten, zylindrischen Abschnitt (20) und ein zweites Teil aufweist, welches aus einem zylindrischen Muffenelement (21) aus einem weichen Werkstoff besteht, welches in dem zylindrischen Abschnitt (20) gleitend bewegbar in Eingriff bringbar ist, wobei ein Endflansch des Muffenelementes (21) dafür vorgesehen ist, dass er gegen den Endabschnitt des zylindrischen Abschnittes (20) des gewellten Rohrelementes (9) anliegt.

2. Baugruppe nach Anspruch 1,
**dadurch gekennzeichnet, dass**
der zylindrische Abschnitt (20) eine Aussparung (31) aufweist, in der eine Nut (33) des Muffenelementes (21) in Druckeingriff bringbar ist, um zu verhindern, dass das Muffenelement (21) von dem Rohrelement (9) axial abgestoßen wird.

3. Baugruppe nach Anspruch 2,
**dadurch gekennzeichnet, dass**
die Aussparung (31) dafür vorgesehen ist, eine Rohrklemmschelle aufzunehmen.

## Revendications

1. Dispositif de type tube-manchon pour des appareils ménagers, **caractérisé en ce que** ledit dispositif de type tube-manchon comprend une première pièce composée d'un élément tubulaire strié (9) présentant, au niveau d'au moins une extrémité de celui-ci, une partie cylindrique lisse (20) et une seconde pièce composée d'un élément de type manchon cylindrique (21) en matériau mou qui peut être engagé de manière coulissante dans ladite partie cylindrique (20), ledit élément de type manchon (21) présentant une collerette d'extrémité afin d'être en contact contre la partie d'extrémité de ladite partie cylindrique (20) dudit élément tubulaire strié (9).

2. Dispositif selon la revendication 1, **caractérisé en ce que** ladite partie cylindrique (20) comprend un creux (31) dans lequel peut être engagée par pression une rainure (33) dudit élément de type manchon (21) afin d'éviter que ledit élément de type manchon (21) ne soit éjecté de manière axiale dudit élément tubulaire (9).

3. Dispositif selon la revendication 2, **caractérisé en ce que** ledit creux (31) est adapté pour loger une attache de serrage de tube.
